# EUROPÄISCHE PATENTSCHRIFT

(11) **EP 2 551 620 B1**
(45) Veröffentlichungstag und Bekanntmachung des Hinweises auf die Patenterteilung: **11.09.2013**
(21) Anmeldenummer: 11175194.7
(22) Anmeldetag: 25.07.2011
(51) Int. Cl.: F27B 17/02, A61C 13/20

(54) **Dentalofen**
Dental oven
Four dentaire

(43) Veröffentlichungstag der Anmeldung: 30.01.2013
(73) Patentinhaber: Ivoclar Vivadent AG, 9494 Schaan (LI)
(72) Erfinder: Jussel, Rudolf, 6805 Feldkirch-Gisingen (AT)
(74) Vertreter: Baronetzky, Klaus

(56) Entgegenhaltungen:
- DE-A1- 3 927 998

## Beschreibung

Die Erfindung betrifft einen Dentalofen, gemäß dem Oberbegriff von Anspruch 1, sowie ein Verfahren zum Betrieb eines Dentalofens, gemäß dem Oberbegriff von Anspruch 12.

Derartige Dentalöfen, mit welchen Dentalrestaurationsteile in sogenannten Brennzyklen gebrannt werden können, sind seit langem bekannt.

So zeigt bereits die DE 1 160 777 A einen elektrisch beheizbaren Dentalofen mit einer Unterdruckquelle in Form einer Kolbenpumpe als Unterdruckpumpe. Nachdem die Pumpe je nach Auslegung ein beträchtliches Arbeitsgeräusch erzeugt, wird sie gerne über eine mehrere Meter lange Unterdruck- oder Saugleitung betrieben, also räumlich von dem Dentalofen etwas getrennt. Die Saugleitung ist hierbei zweckmäßig als unterdruckfester und in gewissen Grenzen flexibler Schlauch ausgebildet. Dieser Schlauch muss zudem temperaturfest sein, denn die aus der Brennkammer des Dentalofens stammende Luft kann durchaus recht heiss sein, auch wenn sie beim Durchtreten der Ofenwandung abgekühlt wird.

Typischerweise muss die Temperaturfestigkeit bis ca. 300 °C gegeben sein, und zwar in erster Näherung unabhängig davon, ob der Dentalofen mit einer Brenntemperatur von beispielsweise 1.200 °C oder einer recht hohen Brenntemperatur von 1.600 °C betrieben wird.

In neuerer Zeit werden für die Herstellung von Dentalrestaurationsteilen sogenannte Muffelöfen als Dentalöfen eingesetzt. Ein Beispiel hierfür ist der DE 40 02 358 C1 zu entnehmen. Bei derartigen Dentalöfen wird die zu verformende Keramik als Rohling oder "Grünling" in einen Presskanal eingesetzt, der in einer vorbereiteten Gipsmuffel ausgebildet ist. Die Muffel wird zusammen mit dem Dentalrestaurationsteil erwärmt, und zwar meist, nachdem sie bereits in einem sogenannten Vorwärmofen auf eine Ausgangstemperatur von beispielsweise 700 °C gebracht worden ist. Die Brennkammer dieses Dentalofens wird unter Unterdruck gesetzt, indem eine Unterdruckpumpe einen, Unterdruck ein sogenanntes "Vakuum", dort herstellt. Ein Pressstempel verpresst dann den Grünling und beim Erweichen des dentalen Restaurationsmaterials aufgrund der Temperaturzunahme gelangt dieses, begünstigt durch den Unterdruck, der in dem gesamten Brennraum herrscht, porenfrei in die Formhohlräume, die in ihrer Form den zu erstellenden Dentalrestaurationsteilen entsprechen.

Dieses Verfahren ist seit langem bekannt und hat sich bewährt, wobei natürlich eine Voraussetzung für das Gelingen der Bereitstellung der Dentalrestaurationsteile darin besteht, dass in der gesamten Brennkammer, also auch in der Muffel selbst, Unterdruck in ausreichendem Maße besteht.

Gips oder ähnliche Vergußmassen sind nicht gasdicht und nicht flüssigkeitsdicht, haben jedoch einen gewissen Strömungswiderstand, so dass der Aufbau eines vollständig ausgeglichenen Unterdrucks in der Brennkammer ein Betrieb der Saugpumpe, die die Unterdruckquelle bildet, über eine Zeit von mindestens mehreren Sekunden oder Minuten erfordert. Gerade bei vorgewärmten Muffeln ist die "Starttemperatur" dann bereits deutlich höher als die Raumtemperatur, und es strömt gleich heiße Luft in die Saugleitung hinein, wenn die Saugpumpe eingeschaltet wird.

Um zu verhindern, dass die Saugpumpe durch die heiße Luft, die gegebenenfalls auch verunreinigt sein kann, beschädigt wird, schreiben die Hersteller mindestens der Pumpen, oder gegebenenfalls auch die Hersteller der Dentalöfen, vor, dass die Unterdruckleitung eine gewisse Länge nicht unterschreiten darf, beispielsweise von 3 Metern. Um die gewünschte Flexibilität der Unterdruckleitung sicher zu stellen, wird der Innendurchmesser - und damit der Außendurchmesser - auf herstellungstechnisch günstige Maße beschränkt, die auch die Verwendung von Standard-Unterdruckleitungen ermöglichen. Derartige Unterdruckleitungen lassen sich dann auch in ihrer Länge auf die räumlichen Gegebenheiten im Dentallabor anpassen, nachdem sie als Meterware verfügbar sind.

Ein weiterer Vorteil der etwas längeren Saugleitung besteht darin, dass eine gewisse "Druckelastizität" gegeben ist; die Unterdruckleitung wirkt gleichsam wie ein Puffer und verhindert auch Unterdruckspitzen, die durch die Unterdruckpumpe je nach deren Konstruktion eingeleitet werden können.

Ein gravierender Nachteil, der bislang jedoch die erwünschte Auslegung einer Unterdruckleitung in einer beliebigen Länge verhinderte, bestand und besteht in der Neigung dieser, zu verstopfen. Durch das starke Temperaturgefälle zwischen Brennkammer und Umgebungsluft fällt die nicht mitgeführte Feuchtigkeit aus der Brennkammer in der Unterdruckleitung aus. Dies führt nicht nur zur Zunahme des Strömungswiderstands, sondern insbesondere auch zur Verschlechterung der Qualität des Unterdrucks, denn mit Aufbau des Unterdrucks sinkt die Verdampfungstemperatur der in der Unterdruckleitung vorhandenen Wassertröpfchen.

Im Hinblick hierauf haben die Hersteller von Dentalöfen regelmäßig spezielle Entfeuchtungsprogramme realisiert, bei denen auf unterschiedliche Weise versucht werden soll, die in der Unterdruckleitungen bestehtenden Wassertröpfchen zu entfernen.

Es ist auch bereits vorgeschlagen worden, kurzerhand mehrere Unterdruckleitungen bereitzuhalten und diese einfach bei zu starker Tröpfchenbildung auszutauschen. Dies ist jedoch umständlich und erfordert eine zusätzliche Lagerhaltung, und erzeugt gegebenenfalls auch Abdichtprobleme bei der erneuten Montage der frischen Unterdruckleitung.

Bereits seit längerer Zeit ist es bekannt, dass die Muffel selbst und/oder das aus Dentalkeramiken bestehende Dentalrestaurationsmaterial eine erhebliche Restfeuchte aufweisen können.

Um die Restfeuchte zu entfernen, betreibt man den Dentalofen bei einer Entfeuchtungstemperatur unter Unterdruck. Während dieses Entfeuchtungsprogramms sind die Ventile des Dentalofens zur externen Unterdrucksquelle hin geöffnet, so dass mit Wasserdampf angereicherte Luft durch die Saugleitung zur Unterdruckquelle strömt. Die Saugleitung wird hierdurch übermäßig durchfeuchtet, was gegebenenfalls problematisch sein kann, wenn anschließend hieran die Dentalkeramik aufgeheizt wird, und während des Pressvorgangs der Unterdruck unbedingt in der erwünschten Qualität aufrecht erhalten werden muss.

Bei all zu starken Feuchtigkeitsablagerungen in der langen Saugleitung gelingt dies nicht mehr, was die Qualität der Restauration negativ beeinflusst.

Daher liegt der Erfindung die Aufgabe zu Grunde, einen Dentalofen gemäß dem Oberbegriff von Anspruch 1 sowie Verfahren zum Betrieb eines Dentalofens gemäß dem Oberbegriff von Anspruch 12 zu schaffen, die hinsichtlich der Qualität des Dentalrestaurationsteils verbessert sind, ohne das besondere Investitionen in Dentalofen erforderlich wären.

Dieser Aufgabe wird erfindungsgemäß durch die Ansprüche 1 bzw. 12 gelöst. Vorteilhafte Weiterbildungen ergeben sich aus den Unteransprüchen.

Dabei ist die Bereitstellung eines speziellen Freispülprogramms für die Saugleitung oder Unterdruckleitung vorgesehen, die diese zum einen reinigt, also den Strömungswiderstand wieder auf das ursprüngliche Maß bringt, und zum anderen die bestehende Feuchtigkeit in Form von Wassertröpfchen entfernt. Während dieses Freispülprogramms bleibt erfindungsgemäß der Unterdruck in der Brennkammer erhalten, und zwar über die ohnehin vorhandene Ventilanordnung am oder im Dentalofen.

Damit kann auch während des vorstehenden Entfeuchtungsprogramms des Dentalofens das erfindungsgemäße Freispülprogramm durchgeführt werden, aber auch zu einem beliebigen anderen Zeitpunkt, also auch während des Brennprozesses, oder auch während des Stillstands des Brennofens oder auch während eines Unterdruck-Testprogramms.

Erfindungsgemäß besonders günstig ist es, dass der kalte Saugschlauch, der die Saugleitung bildet, vollständig durchgespült und entfeuchtet werden kann. Im Bereich des Brennofens selbst, also zwischen der Ventilanordnung und der Brennkammer, ist der Saugschlauch oder die Saugleitung vergleichsweise heiß, so dass es dort nicht zu Ablagerungen kommt. Sobald der Saugschlauch den Dentalofen verlässt, ist er der Umgebungstemperatur ausgesetzt, die insofern für die heiße und feuchte Luft in der Saugleitung eine Kältefalle bildet, die zum Abscheiden von Wassertröpfchen führt.

Erfindungsgemäß ist es günstig, dass auch preisgünstige Unterdruckpumpen eingesetzt werden können, auch solche, bei denen ein Wiederanlaufen der Unterdruckpumpe unter Unterdruck nicht möglich ist. Für den Wiederanlauf einer derartigen Pumpe kann dann kurzerhand und kurzzeitig auf Freispülen geschaltet werden, so dass die Pumpe anlaufen kann. Dennoch bleibt während des erneuten Anlaufens der Pumpe erfindungsgemäß der Unterdruck in der Brennkammer aufrechterhalten.

Erfindungsgemäß besonders günstig ist es, dass mit der Ventilanordnung, die die Brennkammer abdichtet, die Teile der Unterdruckquelle und des Saugschlauchs, die sich außerhalb des Dentalofens erstrecken, vollständig abtrennbar sind. Durch die druckmäßige Entkopplung lassen sich hier ohne Weiteres Wartungsarbeiten, beispielsweise auch ein Austausch der Pumpe, vornehmen, während der Unterdruck in der Brennkammer erhalten bleibt. Auch versteht es sich, dass ein Wiederanlauf der Unterdruckpumpe so ohne Weiteres möglich ist.

Erfindungsgemäß ist es auch günstig, dass auf Pumpen mit integriertem Freilauf, die vergleichsweise teuer sind, verzichtet werden kann. Derartige Vakuumpumpen, die bereits vorgeschlagen worden sind, ermöglichen eine Freispülung der Pumpe selbst, ohne dass eine Unterdruckleitung hiervon betroffen währe, so dass sich die erfindungsgemäßen Vorteile mit ihnen ohnehin nicht erzielen lassen würden.

Erfindungsgemäß ist es demgegenüber vorgesehen, dass gerade die Saugleitung oder Unterdruckleitung, die als Kältefalle besonders kondensieranfällig ist, freigepumpt bzw. freigespült werden kann. Bei einer Pumpleistung zwischen 14 Liter pro Minute und 20 Liter pro Minute lässt sich in etwas mehr als einer Minute immerhin 1 Mol Wasser aus der Saugleitung entfernen, so dass meist eine kurzzeitige Unterbrechung der Pumpwirkung auf die Brennkammer - wobei allerdings der Unterdruck in der Brennkammer beibehalten wird - ausreicht, um das erwünschte Freispülen zu gewährleisten.

Weiter ist es vorgesehen, eine Steuervorrichtung für die Ventilanordnung zu verwenden, die manuell oder automatisch das oder die Ventile zur Erreichung des vorstehend genannten Zwecks einschaltet. Für das Freispülprogramm kann beispielsweise ein Ein-/Aus-Ventil eingesetzt werden, das sich zwischen der Saugleitung und der Brennkammer erstreckt und das geschlossen wird, wenn das Freispülprogramm gestartet werden soll. Diesem benachbart, also am Beginn der freiliegenden Saugleitung, ist bei dieser Ausführungsform ein weiteres Ein-/Aus-Ventil vorgesehen, das ebenfalls Teil der Ventilanordnung ist und das dann mit einem Freispüleingang den Saugleitungseingang verbindet. Der Freispüleingang kann mit der Umgebungsluft in Verbindung stehen, bevorzugt über ein Luftfilter, das Verunreinigungen der Umgebungsluft aus der Saugleitung fernhält.

Anstelle der beiden Ein-/Aus-Ventile lässt sich auch ein einziges Umschaltventil verwenden, das die gleiche Funktion bereitstellt, also praktisch den Saugleitungseingang zwischen den zwei Anschlüssen "Umgebungsluft" und "Brennkammer" umschaltet.

Der Brennkammeranschluss kann direkt an den aus Metall bestehenden Mantel der Brennkammer - natürlich abgedichtet - angeflanscht sein. Typischerweise ist das Dämmaterial recht porös, so dass eine separate Leitung, der das Dämmaterial durchtritt, unnötig ist. Darüber hinaus wirkt das poröse Wärmedämmaterial, beispielsweise Feuerleichtstein, als zusätzlicher Eingangsfilter für die Saugleitung.

In alternativer Ausgestaltung ist es vorgesehen, in dem Wärmedämmaterial an dem Sauganschluss 18 ein spezielles Filterelement, das auch austauschbar ist, zu realisieren. Dieses Filterelement wird dann von der Abluft der Brennkammer durchströmt, so dass chemische Verunreinigungen dort gegebenenfalls schon aufgefangen werden könne. Dieses Filterelement wirkt dann je nach Ausgestaltung zugleich auch wärmedämmend, so dass im Vergleich mit Feuerleichtstein keine zusätzlichen Wärmeverluste entstehen. Gegebenenfalls kann das Filterelement auch einen Katalysator für chemische Verbindungen aufweisen, katalysierbar sind.

Auch bei Verwendung von Fasermaterial für die Wärmedämmung, das typischerweise hygroskopischer ist als Feuerleichtstein, lässt sich erfindungsgemäß der Sauganschluss in der Ofenwand anbringen, denn das Wärmedämmaterial wird recht stark erhitzt, auch wenn es faserförmig ausgestaltet ist, so dass sich dort keine Feuchtigkeitsablagerungen bilden.

Zwischen dem Mantel der Brennkammer, und dem Gehäuse des Dentalofens ist erfindungsgemäß die Ventilanordnung und die zugehörige Steuervorrichtung vorgesehen. Auch bei einer Brennkammertemperatur von 1.600 °C ist sichergestellt, dass die Ventilanordnung bei dieser Ausführungsform nicht überhitzt. Sie ist typischerweise über ein kurzes Rohrstück von der Brennkammerwandlung beabstandet, und wird durch die Umgebungsluft gekühlt.

Erfindungsgemäß besonders günstig ist es, dass bereits Dentalöfen mit Ventilanordnungen bekannt geworden sind. Daher lässt sich ein erfindungsgemäßer Dentalofen auch per Nachrüstung realisieren, in dem beispielsweise lediglich ein zusätzliches Ventil hinzugefügt wird, oder eine Änderung der Steuerung vorgenommen wird.

Erfindungsgemäß ist es auch möglich, über die Steuervorrichtung den Innendruck in der Brennkammer zu erfassen und das so gewonnene Messsignal für die Einschaltung des Freispülprogramms zu verwenden. Hierdurch lässt sich dann automatisch ein Freispülprogramm einfügen, wenn bei der Unterdruckerzeugung in der Brennkammer festgestellt wird, dass der Innendruck in der Brennkammer zu langsam sinkt, die Pumpe also nicht genug Nutzleistung erbringt, da die Saugleitung verstopft ist, also sich dort Wassertröpfchen kondensiert haben.

Die Messung des Unterdrucks kann entweder an dem gleichen Anschluss des Brennkammermantels wie vorstehend erwähnt erfolgen, oder aber bei Bedarf auch an einem separaten Messanschluss.

In einer modifizierten Ausgestaltung ist es vorgesehen, am Brennkammermantel zwei Sauganschlüsse zu realisieren, die zwei Sauganschlüsse zu realisieren, die je getrennt mit Unterdruck beaufschlagbar sind. Die Umschaltung kann beispielsweise über ein hierzu vorgesehenes Umschaltventil realisiert sein, und es ist auch möglich, einen der Anschlüsse am Ofenunterteil und den anderen Anschluss am Ofenoberteil oder Ofenkopf zu realisieren.

### [Hieran schließen sich die Vorteile der Unteransprüche an.]

Weitere Vorteile, Einzelheiten und Merkmale ergeben sich aus der nachstehenden Beschreibung zweierAusführungsbeispiele der Erfindung anhand der Zeichnungen. Es zeigen:
- Fig. 1: eine schematische Ansicht eines erfindungsgemäßen Dentalofens in einer ersten Ausführungsform; und
- Fig. 2: eine schematische Ansicht eines erfindungsgemäßen Dentalofens in einer zweiten Ausführungsform.

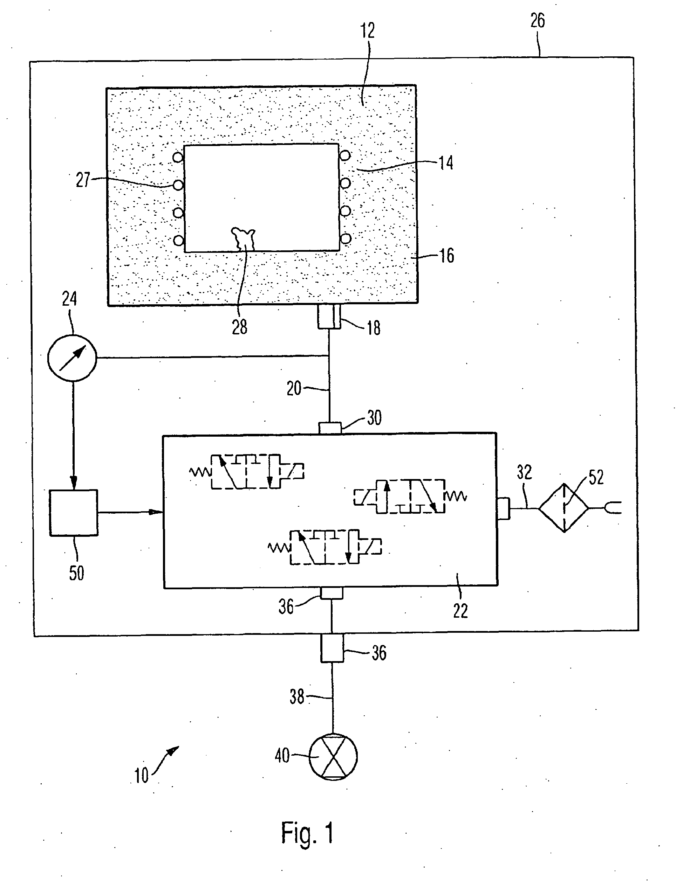

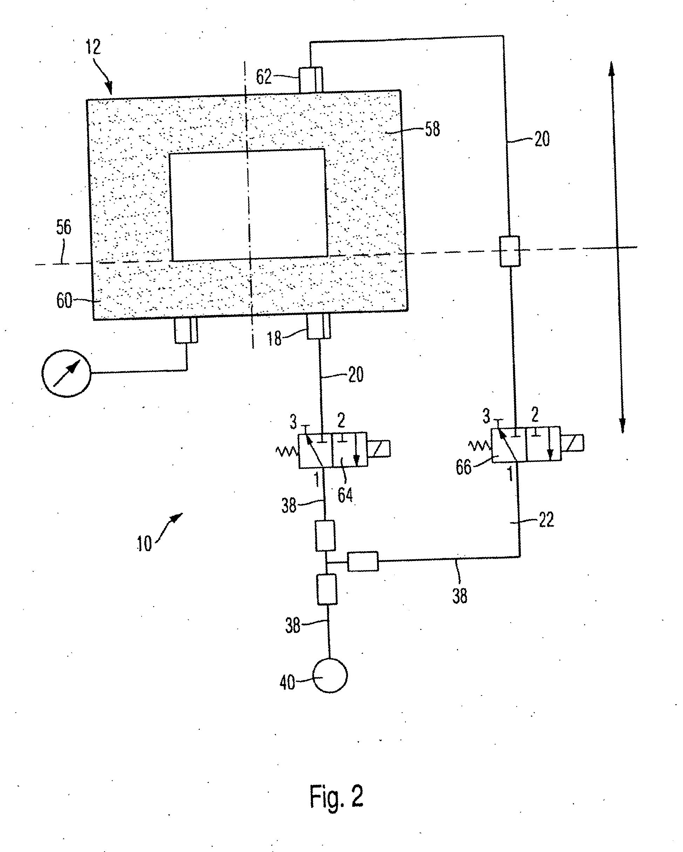

Der in Fig. 1 dargestellte Dentalofen 10 weist eine Brennkammer 12 auf, die für die Wärmebehandlung von dentalen Restaurationsteilen bestimmt ist. In an sich bekannter Weise kann die Brennkammer geöffnet werden, entweder über eine Tür oder über eine Teilung zwischen Brennkammerboden und Ofenkopf, wie es in Fig. 2 schematisch verdeutlicht ist.

Die Brennkammer 12 ist gegenüber der Umgebung abgedichtet. Sie ist mit Wärmedämmaterial 14 ausgekleidet, das in an sich bekannter Weise mit recht großer Wandstärke vorgesehen ist, um eine gute Wärmedämmung zu ermöglichen. Das Wärmedämmaterial ist in ebenfalls an sich bekannter Weise gasdurchlässig und wird von einem Brennkammermantel 16 umgeben, der gasdicht ausgestaltet ist.

Der Brennkammermantel weist einen Saugleitungsanschluss 18 auf, der mit einer Saugleitung in Form eines Saugrohrs in Verbindung steht. Das Saugrohr bildet eine Verbindung zwischen dem Brennkammermantel 16 und einer Ventilanordnung 22, deren Funktion weiter im Einzelnen beschrieben wird.

Von dem Saugrohr 20 zeigt ferner eine Stichleitung zu einem Druckmesser 24 ab. Der Druckmesser 24 oder Unterdrucksensor misst insofern über das Saugrohr 20 den Druck in dem Inneren der Brennkammer 12. Das Saugrohr 20 ist recht temperaturstabil und kurz, beispielsweise 5 cm bis 20 cm. Es ist an die Ventilanordnung 22 angeschlossen, deren Funktion im Einzelnen weiter unten beschrieben wird.

Die Brennkammer 12, der Druckmesser 24 und die Ventilanordnung 22 samt der zugehörigen Leitungsverbindungen sind vollständig in einem Gehäuse 26 des Dentalofens 10 aufgenommen. Die Brennkammer 12 weist eine Heizeinrichtung 27 auf, die für die Erwärmung des in der Brennkammer 12 aufgenommenen dentalen Restaurationsteils 28 bestimmt ist. Trotz der recht dicken Wärmedämmaterials 14 lässt sich nicht verhindern, dass der Innenraum des Gehäuses 26 bei eingeschalteter Heizeinrichtung 27 etwas erwärmt wird. Dies gilt dann auch für das Saugrohr 20 und in gewissem Maße auch für die Ventilanordnung 22, die sich ebenfalls in dem Gehäuse 26 befinden. Die Temperatur nimmt jedoch mit dem Abstand von der Brennkammer 12 ab. Dennoch kann die Ventilanordnung 22 bei einer längeren Zeit auf 1.600 °C erhitzten Brennkammer 12 sich auf beispielsweise über 100 °C erwärmen. Daher ist die Ventilanordnung 22 temperaturfest ausgelegt, so dass sie beispielsweise bei Temperaturen von 200 °C noch störungsfrei arbeitet.

Die Ventilanordnung 22 weist einen Brennkammer-Saugleitungsanschluss 30, einen Umgebungsluft-Anschluss 32 und einen Ausgangsanschluss 34 auf, der über einen Flansch 36 mit einer Saugleitung 38 in Strömungsverbindung steht. Die Saugleitung 38 ist mehrere Meter lang, also beispielsweise 2 m bis 10 m. An ihrem von dem Gehäuse 26 abgewandten Ende ist eine Kolbenpumpe 40 als Unterdruckquelle eingesetzt.

Es versteht sich, dass anstelle einer Kolbenpumpe auch ohne Weiteres eine Membranpumpe oder eine beliebige andere Pumpe eingesetzt werden kann. Die Pumpe muss keine besondere Temperaturfestigkeit haben, denn aufgrund der Länge der Saugleitung 38, die der Raumtemperatur ausgesetzt ist, kühlt die aus der Brennkammer 12 abgesaugte Luft deutlich ab, beispielsweise auf 50 °C, was praktisch jede für diesen Zweck geeignete Pumpe verträgt.

Nachfolgend wird die Funktion der Ventilanordnung 22 beschrieben.

Beim Beginn eines Brennzykluses ist die Kolbenpumpe 40 nicht in Funktion, und die Ventilanordnung 22 schaltet eine Verbindung zwischen dem Brennkammer-Saugleitungsanschluss 30 und dem Ausgangsanschluss 34. Der Umgebungsluftanschluss 32 ist hingegen gesperrt.

In diesem Zustand ist die Brennkammer 12 auf Atmosphärendruck und lässt sich beliebig öffnen und schließen, um das Dentalrestaurationsteil 28 einzubringen. Bevorzugt ist es das Dentalrestaurationsteil 28 in einer hier nicht dargestellten und vorgeheizten Muffel aufgenommen, und der Dentalofen 10 ist als Pressofen ausgebildet. Es versteht sich, dass alternativ auch ein reiner Brennofen erfindungsgemäß realisierbar ist, bei dem das Dentalrestaurationsteil unmittelbar gebrannt wird.

Für den Beginn des Brennzyklus wird die Heizeinrichtung 27 eingeschaltet, und zugleich auch die Kolbenpumpe 40. In diesem Zustand ist die Ventilanordnung 22 ebenfalls zwischen Brennkammer-Saugleitungsanschluss 30 und Ausgangsanschluss 34 verbunden, so dass zunehmend heisse Luft aus der Brennkammer 12 abgepumpt wird und allmählich ein Unterdruck erzeugt wird.

Muffeln und Dentalrestaurationsteile haben typischerweise eine gewisse Restfeuchte. Wenn diese nicht ganz gering ist, wird regelmäßig ein sogenanntes Entfeuchtungsprogramm vor Beginn des eigentlichen Brennzyklus eingesetzt, das dazu dient, die Feuchtigkeit zu entfernen. Hierzu wird die Heizeinrichtung so eingeschaltet, dass die Temperatur im Innenraum der Brennkammer 12 beispielsweise 140 °C beträgt. Die mit Wasserdampf angereicherte Luft wird abgepumpt und gelangt durch die Kolbenpumpe 40 ins Freie.

Nachdem die Saugleitung 38 jedoch zumindest an ihrem kolbenpumpenseitigen Ende deutlich kühler als 100 °C ist, kondensiert die enthaltene Feuchtigkeit und bildet im Inneren der Saugleitung 38 Tröpfchen. Diese Tröpfchen verengen zum einen den Strömungsquerschnitt der Saugleitung, so dass sich der Strömungswiderstand erhöht. Zum anderen beeinflussen sie, - was noch gravierender ist - die Qualität des erzeugten Unterdrucks. Dies liegt darin begründet, dass die Verdampfungstemperatur von Wasser mit abnehmendem Druck - also zunehmendem Unterdruck - deutlich sinkt, so dass nach und nach die Wassertröpfchen verdampfen und der so erzeugte Wasserdampf anstelle der zu evakuierenden Luft entfernt wird.

Wenn das Entfeuchtungsprogramm abgeschlossen ist, wird typischerweise der eigentliche Brennzyklus mit einer erhöhten Temperatur vorgenommen, während gleichzeitig die Kolbenpumpe 40 läuft und der Druck in der Brennkammer 12 dementsprechend weiter abnimmt. Die eigentliche Brenntemperatur beträgt typischerweise deutlich über 1.000 °C, beispielsweise ca. 1.150 °C bei einer Lithiumdisilikat-Keramik oder 1.600 °C bei einer Zirkondioxid-Keramik.

Während der Aufheizphase des Brennzykluses soll der Druck im Inneren der Brennkammer 12, der über den Druckmesser 24 gemessen wird, immer weiter absinken. Dies wird von dem Druckmesser 24 erfasst. So lange das Absenken des Drucks in der Brennkammer in einer Nennleistung der Kolbenpumpe 40 entsprechenden gewünschten Weise vollzogen wird, bleibt die Ventilanordnung 22 in der zuvor erläuterten Stellung.

Der Druckmesser 24 ist mit einer Steuervorrichtung 50 verbunden, die das Ausgangssignal des Druckmessers 24 auswertet. Die Steuervorrichtung 50 steuert elektrisch die Ventilanordnung 22. Wenn die Steuervorrichtung 50 feststellt, dass der Druckgradient zu gering ist, also der Druck in der Brennkammer 12 zu langsam abfällt, schaltet die Steuervorrichtung 50 die Ventilanordnung 22 um. Hierbei wird ein erfindungsgemäßes Freispülprogramm durchgeführt. In diesem Zustand der Ventilanordnung 22 ist der Brennkammer-Saugleitungsanschluss 30 gesperrt.

Hingegen besteht in diesem Zustand eine Verbindung zwischen dem Umgebungsluftanschluss 32 und dem Ausgangsanschluss 34. Über ein Luftfilter 52 wird Umgebungsluft angesaugt. Die Kolbenpumpe 40 arbeitet in diesem Zustand, also während des Freispülprogramms, mit voller Pumpleistung von beispielsweise 20 Litern pro Minute. Dementsprechend groß ist die Strömungsgeschwindigkeit in der Saugleitung 38.Hierdurch und durch die trockene Umgebungsluft, die in die Saugleitung 38 eintritt, wird die Saugleitung 38 freigespült. Das Freispülprogramm wird so lange durchgeführt, bis die Saugleitung 38 innen getrocknet ist, beispielsweise auch mehrere Minuten. Alternativ kann auch die Drehzahl der Kolbenpumpe 40 erfasst werden, und das Freispülprogramm dann beendet werden, wenn die Drehzahl der Kolbenpumpe 40 anzeigt, dass die Saugleitung 38 nun vollständig freigespült ist.

Wenn dies der Fall ist, wird die Absaugung von Luft aus der Brennkammer 12 fortgesetzt. Nachdem zwischenzeitlich der Brennkammer-Saugleitungsanschluss 30 gesperrt war, ist der einmal erzielte Unterdruck nicht verloren, und die weitere Absenkung des Drucks erfolgt nunmehr wiederum mit voller Wirkung der Kolbenpumpe 40, also ohne Behinderungen durch eine Verstopfte Saugleitung 38.

In ihrer Funktion entspricht die Ventilanordnung 22 insofern einem Umschaltventil. Zur Beibehaltung des Unterdrucks in der Brennkammer 12 ist es jedoch günstig, wenn die Umschaltung von der Freispülstellung auf die Normalstellung der Ventilanordnung dergestalt verzögert erfolgt, dass zunächst der Umgebungsluftanschluss gesperrt wird und erst dann der Saugleitungsanschluss 30 geöffnet wird, wenn die Kolbenpumpe 40 auch die mehrere Meter lange Saugleitung 38 und den Ausgangsanschluss 34 unter einen adequaten Unterdruck gesetzt hat.

Ansonsten ist zu erwarten, dass die in der Saugleitung 38 von dem Freispülprogramm bestehende Luft in die Brennkammer 12 rückwärts einströmt, nachdem die Kolbenpumpe 40 nicht schnell genug den erneuten Unterdruck aufbauen kann.

Insofern ist es günstiger, wenn das "Umschaltventil" der Ventilanordnung 22 aus zwei Einzelventilen besteht, die von der Steuervorrichtung 50 in der vorstehend genannten Weise gesteuert werden.

Ein Freispülprogramm kann dementsprechend erfindungsgemäß zu einem beliebigen Zeitpunkt durchgeführt werden. Grundsätzlich ist dies auch während eines Entfeuchtungsprogramms möglich, aber bevorzugt dann, wenn der eigentliche Brennzyklus mit dem Brennprogramm gestartet wird, um so die aus dem Entfeuchtungsprogramm stammende Feuchtigkeit in der Saugleitung 38 vorab zu entfernen.

Es ist aber auch möglich, das Freispülprogramm während eines speziellen Serviceprogramms des Dentalofens ablaufen zu lassen, oder auch zwischen Brennzyklen, also während der Dentalofen 10 ohnehin geöffnet ist.

In Fig. 2 ist eine modifizierte Ausgestaltung eines erfindungsgemäßen Dentalofens 10 dargestellt. Gleiche oder entsprechende Teile wie in Fig. 1 sind bei dieser Ausführungsform mit gleichen Bezugszeichen dargestellt.

Wie aus Fig. 2 ersichtlich ist, weist der Dentalofen 10 hinsichtlich seiner Brennkammer 12 eine Teilungsebene 56 auf. An der Teilungsebene lässt sich ein Ofenkopf 58, der auch als Ofenoberteil bezeichnet wird, von einem Ofenunterteil 60 trennen. Dies geschieht dadurch, dass entweder der Ofenkopf 58 angehoben oder leicht schräg nach oben geschwenkt wird, und das Ofenunterteil 60 stationär verbleibt. Diese Ausgestaltung ist bevorzugt, da hierbei die Dentalrestaurationsteile, die sich in der Brennkammer 12 befinden, keiner Erschütterung ausgesetzt sind. Alternativ ist es auch möglich, den Ofenkopf 58 stationär zu belassen, und das Ofenunterteil 60 herunterzufahren; diese Ausgestaltung ist preisgünstiger herzustellen, da die Heizeinrichtung 27 dann auch stationär verbleiben kann.

Es versteht sich, dass in beiden Fällen an der Teilungsebene 56 für eine ausreichende Abdichtung Rechnung getragen wird.

In diesem Ausführungsbeispiel ist die Brennkammer 12 mit zwei Sauganschlüssen 18 und 62 ausgestattet, wobei der Sauganschluss 62 am Ofenkopf 58 und der Sauganschluss 18 am Ofenunterteil 60 angebracht ist.

Beide Sauganschlüsse führen über Saugrohre 20 zur Ventilanordnung 22. Die Ventilanordnung 22 weist ein erstes Drei-/Zwei-Wegeventil 64 und ein zweites Drei-/ZweiWegeventil 66 auf. Auch wenn das Ventil 66 in deutlichem Abstand vom Sauganschluss dargestellt ist, versteht es sich, dass in der Praxis lediglich ein kurzes Saugrohr 20 dort vorgesehen ist. Ausgangsseitig jedes Ventils 64 und 66 ist die Saugleitung 38 angeschlossen, die sich über mehrere Meter je zu der Kolbenpumpe 40 erstreckt.

Es versteht sich, dass hierzu die Ausgangs-Saugleitungen 38 der Ventile 64 und 66 in an sich bekannter Weise zusammengeführt sind.

Die Ventile 64 und 66 sind von der nicht dargestellten Steuervorrichtung 50 in beliebiger Weise unabhängig voneinander schaltbar. Sie sind so angeschlossen, dass durch die Saugleitungen 38 welcheselweise Umgebungsluft saugbar ist, so dass kurzerhand eine Umschaltung erfolgen kann, wenn die bislang betriebene Saugleitung 38 verstopft ist. Diese Ausgestaltung hat den Vorteil, dass Freispülprogramme seltener durchgeführt werden müssen, nachdem im Grunde eine der Saugleitungen 38 als Reserveleitung zur Verfügung steht. Beispielsweise kann das Entfeuchtungsprogramm über den Sauganschluss 62 realisiert werden, also bei durchgeschaltetem Ventil 66. Sobald das Entfeuchtungsprogramm abgeschlossen ist, wird das Ventil 66 geschlossen. Die dann ziemlich feuchte zugehörige Leitung 38 verbleibt zunächst wie sie ist, und das Ventil 64 wird geschlossen. Die sich von dem Ventil 64 zur Pumpe 40 erstreckende Saugleitung 38 ist noch unverstopft, so dass mit voller Pumpleistung der Unterdruck in der Brennkammer 12 erzeugt werden kann.

Nach Abschluss des eigentlichen Brennzykluses können dann beide Saugleitungen 38 über Freispülprogramme gesäubert werden, so dass sie für den nächsten Brennzyklus zur Verfügung stehen.

## Patentansprüche

1. Dentalofen, mit einer Brennkammer zur Wärmebehandlung von dentalen Restaurationsteilen, welche über eine Saugleitung mit einer Unterdruckquelle in Verbindung steht, **dadurch gekennzeichnet, dass**
eine Ventilanordnung (22) zwischen Brennkammer (12) und Saugleitung (38) angeordnet ist, mit welcher zur Beibehaltung eines Unterdrucks in der Brennkammer (12) die Saugleitung (38) gegen die Brennkammer (12) sperrbar ist, und die Saugleitung (38) zwischen der Ventilanordnung (22) und der Unterdruckquelle belüftbar ist, insbesondere über einen Umgebungsluft-Anschluss (32); und
dass eine Steuervorrichtung (50) für die Ventilanordnung (22) vorgesehen ist, mit welcher ein Freispülprogramm einschaltbar ist, in welchem die Ventilanordnung (22) den Brennkammer-Saugleitungsanschluss (30) sperrt und den Umgebungsluft-Anschluss mit der Saugleitung (38) verbindet und in welchem die Unterdruckquelle Umgebungsluft durch die Saugleitung (38) saugt.

2. Dentalofen nach Anspruch 1, **dadurch gekennzeichnet, dass** die Steuervorrichtung (50) für die Ventilanordnung (22) durch Anwahl eines Belüftungsprogramms die Saugleitung (38) für einen vorgegebenen Zeitabschnitt, insbesondere 1 Minute, entlüftet, und insbesondere in wiederkehrenden Zyklen das Freispülprogramm durchführt.

3. Dentalofen nach einem der vorhergehenden Ansprüche, **dadurch gekennzeichnet, dass** die Ventilanordnung (22) ein Umschaltventil aufweist, dessen Ausgangsanschluss (34) mit der Saugleitung (38) verbunden ist und dessen einer Schaltanschluss der Umgebungsluftanschluss (32) und dessen anderer Schaltanschluss der Brennkammer-Sauganschluss (30) ist, und dass das Umschaltventil von der Steuervorrichtung steuerbar ist.

4. Dentalofen nach einem der vorhergehenden Ansprüche, **dadurch gekennzeichnet, dass** die Steuervorrichtung (50) des Dentalofens (10) auch auf die Unterdruckquelle, die insbesondere eine Unterdruckpumpe aufweist, wirkt und dass die Unterdruckquelle über eine Steuerleitung oder drahtlos mit der Steuervorrichtung (50) zu ihrer Ein- und Ausschaltung verbunden ist, und dass die Steuervorrichtung (50) insbesondere die Unterdruckquelle einschaltet, wenn die Saugleitung (38) belüftet werden soll.

5. Dentalofen nach einem der vorhergehenden Ansprüche, **dadurch gekennzeichnet, dass** die Ventilanordnung (22) einen Ventil aufweist, über welches bei seiner Öffnung der Brennkammeranschluss (30) der Ventilanordnung (22) mit der Umgebungsluft verbindbar ist, und dass insbesondere die Steuervorrichtung des Dentalofens (10) in diesem Zustand der Ventilanordnung (22) die Unterdruckquelle abschaltet.

6. Dentalofen nach einem der vorhergehenden Ansprüche, **dadurch gekennzeichnet, dass** ein Unterdrucksensor (24) mit der Brennkammer (12) in Verbindung steht und den Druck bzw. den Unterdruck in der Brennkammer (12) misst, dessen Ausgangssignal von der Steuervorrichtung (50) des Dentalofens (10) erfasst wird, wobei die Steuervorrichtung den gewünschten Unterdruck in der Brennkammer (12) durch Einschalten der Unterdruckquelle regelt.

7. Dentalofen nach einem der vorhergehenden Ansprüche, **dadurch gekennzeichnet, dass** der Unterdruck in der Brennkammer (12) kontinuierlich erfasst wird und bei einem zu geringen Unterdruck die Unterdruckquelle eingeschaltet wird, insbesondere dann, wenn trotz Einschalten der Unterdruckquelle Unterdruck nicht ausreichend zunimmt, die Ventilanordnung (22) angesteuert wird und das Freispülprogramm gemäß Anspruch 1 eingeschaltet wird.

8. Dentalofen nach einem der vorhergehenden Ansprüche, **dadurch gekennzeichnet, dass** das Freispülprogramm während eines Brennzyklus, während eines speziellen Serviceprogramms des Dentalofens (10) oder zwischen Brennzyklen eingeschaltet wird.

9. Dentalofen nach einem der vorhergehenden Ansprüche, **dadurch gekennzeichnet, dass** die Steuervorrichtung das Ausgangssignal des Unterdrucksensors des Dentalofens (10) kontinuierlich oder wiederkehrend erfasst und während des Einschaltzustands der Unterdruckquelle den Druckabfallgradient, also den Druckabfall pro Zeit erfasst und das Freispülprogramm einschaltet, wenn der Druckabfallgradient einen vorgegebenen Schwellenwert unterschreitet.

10. Dentalofen nach einem der vorhergehenden Ansprüche, **dadurch gekennzeichnet, dass** die Brennkammer (12) des Dentalofens (10) über eine zweite Saugleitung (38) mit der Unterdruckquelle verbunden ist, und dass beide Saugleitungen (38) über ein Umschaltventil wahlweise einschaltbar sind, so dass stets eine der Saugleitungen (38) eingeschaltet und die andere gesperrt ist.

11. Dentalofen nach einem der vorhergehenden Ansprüche, **dadurch gekennzeichnet, dass** ein an sich bekannter Dentalofen (10) mit einer Ventilanordnung (22) mit mindestens zwei Ventilen oder mindestens einem Umschaltventil mit einer Steuervorrichtung nachrüstbar ist, die ein Freispülprogramm gemäß einem der vorhergehenden Ansprüche erlaubt.

12. Verfahren zum Betrieb eines Dentalofens, in welchem Dentalrestaurationsteile wärmebehandelt werden und unter Unterdruck gesetzt werden, wobei sich eine Saugleitung (38) zwischen der Brennkammer (12) und einer Unterdruckquelle erstreckt, über welche Unterdruck in der Brennkammer (12) erzeugbar ist, **dadurch gekennzeichnet, dass**
eine Ventilanordnung (22) zwischen Brennkammer (12) und Saugleitung (38) zur Beibehaltung eines Unterdrucks in der Brennkammer (12) die Saugleitung (38) gegen die Brennkammer (12) sperrt, und die Saugleitung (38) zwischen der Ventilanordnung (22) und der Unterdruckquelle belüftet wird, insbesondere über einen Umgebungsluft-Abschluss (32);
wobei eine Steuervorrichtung für die Ventilanordnung (22) ein Freispülprogramm einschaltet, in welchem die Ventilanordnung (22) eine Verbindung zwischen einem Ausgangsanschluss (34) der Ventilanordnung (22) und der Umgebungsluft herstellt, über welche die Saugleitung (38) freispülbar ist, wobei die Unterdruckquelle Umgebungsluft durch die Saugleitung saugt, und wobei die Ventilanordnung (22) zugleich den Anschluss der Ventilanordnung (22) zur Brennkammer (12) hin sperrt.

13. Verfahren nach Anspruch 12, **dadurch gekennzeichnet, dass** bei eingeschalteter Unterdruckquelle, also über die Ventilanordnung (22) durchverbundener Saugleitung (38), die Entwicklung des Unterdrucks in der Brennkammer (12) kontinuierlich oder periodisch wiederkehrend gemessen wird und ein Freispülprogramm gestartet wird, wenn der Unterdruck in der Brennkammer (12) langsamer abfällt, als es einen vorgegebenen Schwellenwert entspricht.

## Claims

1. Dental oven comprising a firing chamber for the heat treatment of dental restoration parts, which firing chamber is connected to a negative pressure source via a suction line, **characterized in that**
a valve arrangement (22) is disposed between firing chamber (12) and suction line (38) with the aid of which the suction line (38) is closable towards the firing chamber (12) in order to maintain a negative pressure in the firing chamber (12), and the suction line (38) between the valve arrangement (22) and the negative pressure source is ventilatable, in particular via an ambient air connection (32); and
that a control device (50) is provided for the valve arrangement (22) which is used to turn on a flushing program in which the valve arrangement (22) locks the firing chamber suction line connection (30) and connects the ambient air connection to the suction line (38) and in which the negative pressure source draws ambient air through the suction line (38).

2. Dental oven according to claim 1, **characterized in that** the control device (50) for the valve arrangement (22) vents the suction line (38) for a predetermined period of time, in particular 1 minute, by selecting a ventilation program, and carries out the flushing program in particular in recurring cycles.

3. Dental oven according to any of the foregoing claims, **characterized in that** the valve arrangement (22) is provided with a switching valve whose output connection (34) is connected to the suction line (38) and whose one switching connection is the ambient air connection (32) and whose other switching connection is the firing chamber suction connection (30), and that the switching valve is controllable by the control device.

4. Dental oven according to any of the foregoing claims, **characterized in that** the control device (50) of the dental oven (10) also acts on the negative pressure source, which is provided in particular with a negative pressure pump, and that the negative pressure source is connected to the control device (50) via a control line or wirelessly for turning it on and off, and that the control device (50) turns on in particular the negative pressure source when the suction line (38) is supposed to be ventilated.

5. Dental oven according to any of the foregoing claims, **characterized in that** the valve arrangement (22) is provided with a valve, via which, upon its opening, the firing chamber connection (30) of the valve arrangement (22) can be connected to the ambient air, and that in particular the control device of the dental oven (10) turns off the negative pressure source in this state of the valve arrangement (22).

6. Dental oven according to any of the foregoing claims, **characterized in that** a negative pressure sensor (24) is connected to the firing chamber (12) and measures the pressure or the negative pressure in the firing chamber (12), whose output signal is recorded by the control device (50) of the dental oven (10), wherein the control device controls the desired negative pressure in the firing chamber (12) by turning on the negative pressure source.

7. Dental oven according to any of the foregoing claims, **characterized in that** the negative pressure in the firing chamber (12) is recorded continuously and that the negative pressure source is turned on when the negative pressure is too low, in particular, if in spite of a turning on of the negative pressure source, the negative pressure does not increase sufficiently, the valve arrangement (22) is controlled and the flushing program according to claim 1 is turned on.

8. Dental oven according to any of the foregoing claims, **characterized in that** the flushing program is turned on during a firing cycle, during a specific service program of the dental oven (10) or between firing cycles.

9. Dental oven according to any of the foregoing claims, **characterized in that** the control device records the output signal of the negative pressure sensor of the dental oven (10) continuously or recurrently and records the pressure drop gradient, i.e. the drop in pressure per unit of time, while the negative pressure source is turned on, and turns on the flushing program when the pressure drop gradient falls below a predetermined threshold value.

10. Dental oven according to any of the foregoing claims, **characterized in that** the firing chamber (12) of the dental oven (10) is connected to the negative pressure source via a second suction line (38), and that both suction lines (38) can be turned on optionally via a switching valve so that at any time one of the suction lines (38) is turned on and the other is closed.

11. Dental oven according to any of the foregoing claims, **characterized in that** a dental oven (10) known per se can be retrofitted with a valve arrangement (22) comprising at least two valves or at least one switching valve with a control device, which allows for a flushing program according to any of the foregoing claims.

12. Method for operating a dental oven in which dental restoration parts are heat-treated, and put under negative pressure, wherein a suction line (38) extends between the firing chamber (12) and a negative pressure source, with the help of which negative pressure can be produced in the firing chamber (12), **characterized in that**
a valve arrangement (22) between firing chamber (12) and suction line (38) closes the suction line (38) towards the firing chamber (12) in order to maintain a negative pressure in the firing chamber (12), and the suction line (38) between the valve arrangement (22) and the negative pressure source is ventilated, in particular via an ambient air connection (32); wherein a control device for the valve arrangement (22) turns on a flushing program in which the valve arrangement (22) makes a connection between an output connection (34) of the valve arrangement (22) and the ambient air, via which the suction line (38) can be flushed, wherein the negative pressure source draws in air through the scution line and wherein at the same time the valve arrangement (22) locks the connection of the valve arrangement (22) towards the firing chamber (12).

13. Method according to claim 12, **characterized in that** when the negative pressure source is turned on, i.e. via the valve arrangement (22) interconnected suction line (38), the development of the negative pressure in the firing chamber (12) is measured continuously or periodically recurrently and that a flushing program is started when the negative pressure in the firing chamber (12) decreases more slowly than in correspondence with a predetermined threshold value.

## Revendications

1. Four dentaire, avec une chambre de combustion pour le traitement thermique de pièces dentaires de restauration, lequel est relié par une conduite d'aspiration à une source de dépression, **caractérisé en ce que**
un dispositif à vannes (22) est présent entre la chambre de combustion (12) et la conduite d'aspiration (38), au moyen duquel la conduite d'aspiration (38) peut être fermée par rapport à la chambre de combustion (12) pour le maintien d'une dépression dans la chambre de combustion (12), et la conduite d'aspiration (38) peut être aérée entre le dispositif à vannes (22) et la source de dépression, en particulier au moyen d'un raccord à l'air ambiant (32) ; et
**en ce qu'**il est prévu un dispositif de commande (50) pour le dispositif à vannes (22), au moyen duquel peut être lancé un programme de ventilation, où le dispositif à vannes (22) ferme le raccord chambre de combustion-conduite d'aspiration (30) et relie le raccord à l'air ambiant à la conduite d'aspiration (38), et où la source de dépression aspire l'air ambiant par la conduite d'aspiration (38).

2. Four dentaire selon l'une des revendications précédentes, **caractérisé en ce que** le dispositif de commande (50) pour le dispositif à vannes (22) purge la conduite d'aspiration (38) pendant un intervalle temporel défini, en particulier de 1 minute, par sélection d'un programme d'aération, et exécute notamment le programme de ventilation sous forme de cycles répétés.

3. Four dentaire selon l'une des revendications précédentes, **caractérisé en ce que** le dispositif à vannes (22) comporte une vanne de commutation dont le raccord de sortie (34) est relié à la conduite d'aspiration (38) et dont un raccord de commutation est le raccord à l'air ambiant (32), et dont l'autre raccord de commutation est le raccord chambre de combustion-conduite d'aspiration (30), et **en ce que** la vanne de commutation peut être commandée par le dispositif de commande.

4. Four dentaire selon l'une des revendications précédentes, **caractérisé en ce que** le dispositif de commande (50) du four dentaire (10) agit également sur la source de dépression, laquelle comporte en particulier une pompe à dépression, **en ce que** la source
de dépression est reliée au dispositif de commande (50) par une ligne de commande ou sans fil pour son activation et sa désactivation, et **en ce que** le dispositif de commande (50) active en particulier la source de dépression quand la conduite d'aspiration (38) doit être aérée.

5. Four dentaire selon l'une des revendications précédentes, **caractérisé en ce que** le dispositif à vannes (22) comporte une vanne au moyen de laquelle, en cas d'ouverture de celle-ci, le raccord à la chambre de combustion (30) du dispositif à vannes (22) peut être relié à l'air ambiant, et **en ce que** notamment, dans cet état du dispositif à vannes (22), le dispositif de commande du four dentaire (10) désactive la source de dépression.

6. Four dentaire selon l'une des revendications précédentes, **caractérisé en ce qu'**un capteur de dépression (24) est relié à la chambre de combustion (12) et mesure la pression ou la dépression dans la chambre de combustion (12), le signal de sortie de celui-ci étant détecté par le dispositif de commande (50) du four dentaire (10), le dispositif de commande réglant la dépression souhaitée dans la chambre de combustion (12) par activation de la source de dépression.

7. Four dentaire selon l'une des revendications précédentes, **caractérisé en ce que** la dépression dans la chambre de combustion (12) est détectée de manière continue, et **en ce que** la source de dépression est activée en cas de dépression trop faible, en particulier le dispositif à vannes (22) est commandé lorsque la dépression ne croît pas suffisamment malgré l'activation de la source de dépression, et le programme de ventilation selon la revendication 1 est lancé.

8. Four dentaire selon l'une des revendications précédentes, **caractérisé en ce que** le programme de ventilation est lancé pendant un cycle de combustion, pendant un programme d'entretien spécifique du four dentaire (10) ou entre cycles de combustion.

9. Four dentaire selon l'une des revendications précédentes, **caractérisé en ce que** le dispositif de commande détecte le signal de sortie du capteur de dépression du four dentaire (10) de manière continue ou répétée et détecte le gradient de chute de pression, soit la chute de pression dans le temps, pendant l'état d'activation de la source de dépression, et lance le programme de ventilation quand le gradient de chute de pression devient inférieur à une valeur de seuil définie.

10. Four dentaire selon l'une des revendications précédentes, **caractérisé en ce que** la chambre de combustion (12) du four dentaire (10) est reliée à la source de dépression par une deuxième conduite d'aspiration (38), et **en ce que** les deux conduites d'aspiration (38) sont activables sélectivement au moyen d'une vanne de commutation, si bien qu'une des conduites d'aspiration (38) est toujours activée et l'autre fermée.

11. Four dentaire selon l'une des revendications précédentes, **caractérisé en ce qu'**un four dentaire (10) connu en soi peut être équipé d'un dispositif à vannes (22) comportant au moins deux vannes ou au moins une vanne de commutation avec un dispositif de commande permettant un programme de ventilation selon l'une des revendications précédentes.

12. Procédé de fonctionnement d'un four dentaire, où des pièces dentaires de restauration subissent un traitement thermique et sont soumises à une dépression, une conduite d'aspiration (38) s'étendant entre la chambre de combustion (12) et une source de dépression au moyen de laquelle une dépression peut être générée dans la chambre de combustion (12), **caractérisé en ce que**
un dispositif à vannes (22) entre la chambre de combustion (12) et la conduite d'aspiration (38) ferme la conduite d'aspiration (38) par rapport à la chambre de combustion (12) pour le maintien d'une dépression dans la chambre de combustion (12), et la conduite d'aspiration (38) est aérée entre le dispositif à vannes (22) et la source de dépression, en particulier au moyen d'un raccord à l'air ambiant (32) ;
un dispositif de commande pour le dispositif à vannes (22) lançant un programme de ventilation, où le dispositif à vannes (22) établit une liaison entre un raccord de sortie (34) du dispositif à vannes (22) et l'air ambiant par lequel la conduite d'aspiration (38) peut être ventilée, la source de dépression aspirant l'air ambiant par la conduite d'aspiration, et le dispositif à vannes (22) fermant simultanément le raccord du dispositif à vannes (22) à la chambre de combustion (12).

13. Procédé selon la revendication 12, **caractérisé en ce qu'**en cas de source de dépression activée, autrement dit de conduite d'aspiration (38) raccordée au moyen du dispositif à vannes (22), l'évolution de la dépression dans la chambre de combustion (12) est mesurée de manière continue ou périodiquement répétée, et un programme de ventilation est lancé quand la dépression dans la chambre de combustion (12) décline plus lentement que ne le permet une valeur de seuil définie.
